# EUROPEAN PATENT APPLICATION

(11) **EP 4 567 535 A1**
(43) Date of publication of application: **11.06.2025**
(21) Application number: 24218215.2
(22) Date of filing: 06.12.2024
(51) Int. Cl.: G05B 19/409, G05B 19/418, G06F 16/00, G06F 40/00

(54) **SIMPLIFIED CONTROL MANAGEMENT SYSTEM AND METHOD**

(30) Priority: 07.12.2023 SM P202300452
(71) Applicant: Aivolution S.r.l., 47891 Dogana (SM)
(72) Inventor: Pagliarani, Andrea, Pagliarani Riccione (IT); Pasolini, Roberto, 47924 Rimini (IT); Molinario, Nicholas, 47838 Riccione (IT); Ridolfi, Lorenzo, 61049 Urbania (IT)
(74) Representative: Negrini, Elena

(57) **Abstract**

A simplified control management system, assigned for the management of at least one work system (S) connected to first memory means (Z) for computer data (D), comprises:
- a computer (3) assigned to perform operations on computer data (D);
- a user interface (7) assigned for interaction between the system (1) and a user (U) of the system (1);
- a management interface (5) assigned for interaction between the system (1) and the at least one work system (S) and the first memory means (Z);
the computer (3), the user interface (7) and the management interface (5) being connected to each other.

The system implements at least one generative artificial intelligence model (10) adapted at least to:
- receiving from the user interface (7) natural language messages (M) provided by the user (U) to the user interface (7) and including intents and/or information;
- producing computer data (D) including data, requests and/or commands for the system (1), the at least one work system (S) and/or the first memory means (Z) on the basis of said intents and/or information;
- forwarding said computer data (D) including data, requests and/or commands to the system (1), to at least one work system (S) and/or to the first memory means (Z);
- collecting computer data (D) including data, responses and/or signals from the system (1), from at least one work system (S) and/or from the first memory means (Z);
- generating natural language messages (M) for the user (U) including responses and/or information based on said data, responses and/or signals;
- providing the user interface (7) with said natural language messages (M) for the user (U) including responses and/or information.

The at least one generative artificial intelligence model (10) is based on one or more between Large Language Models (LLM), Large Multimodal Models (LMM), transformer-based models, Small Language Models (SLM).

## Description

### TECHNICAL FIELD

The present invention relates to the management of personal, domestic or industrial devices, machines and other infrastructures, and refers in particular to a simplified control management system.

### BACKGROUND ART

There are known systems for the management of devices, machines, plants, networks, sensors, databases, and other similar infrastructures or work systems.

These known systems are applied both in the domestic or personal context, for example for the management of home automation or so-called "smart home" devices, and in the industrial context, for example for the management of machinery and/or the related manufacturing processes.

A user of a known management system interfaces with this by means of a control panel or so-called "dashboard" type software application, run on a processor, computer or other electronic device provided with at least one screen.

This management system receives information such as data, requests and/or commands from the user and transmits it to the target device in the form of computer data, or receives computer data from a device and presents it to the user in the form of information such as data, graphics and/or signals, possibly processing this information according to predefined schemes before forwarding it in one direction or the other.

For example, the known management system can be provided with a decision-making engine that implements deterministic algorithms, i.e. whose output is uniquely predetermined based on the inputs, and based on predetermined constraints. This decision-making engine processes computer data to provide, for example, analysis for monitoring or optimizing a production cycle, predictions on possible failures of a component based on working hours, and similar.

US2020026733A1 discloses a method, system, and computer program for communicating with an intelligent industrial assistant and an industrial machine. The method includes receiving a first natural language input from a user, which can be associated with a first command of a machine to execute a first process based on that first input. A second natural language input can be provided by the user while the machine is executing the first process. A first response can be determined based on that second input. Communication of the first response to the user can be initiated while the machine is executing the first process.

US2022019748A1 discloses a method for predicting repairs on a vehicle based on natural language processing, which includes: receiving natural language data from a user interface; converting such natural language data into text data; generating processed natural language data by processing in natural language one of such data; comparing the processed data with repair data stored in a database; determining predicted repair data based on said comparison; transmitting the predicted repair data to the user interface.

WO2023191787A1 discloses a method for performing failure predictions for an industrial process. The method includes collecting physical sensor data and generating a set of virtual sensor data by applying a physical model to a subset of the physical sensor data.

A disadvantage of known management systems consists in the fact that their user interfaces are complex, and for their correct use and to extract the most significant information for management they require specific training from users, especially in the fields of so-called "data analysis" and/or "data science", often costly for the users themselves and for the companies in which they work.

Another disadvantage of the known systems consists in the fact that they do not provide their users with reliable predictive information regarding the state of the infrastructures to which they are connected, for example predictions of the measure of production or predictions on energy consumption, since similar predictions, to be reliable, require decision engines based on more sophisticated algorithms, as well as require a multitude of parameters and tuning that may be too complicated and laborious to be provided by users, who should also have advanced analytical and engineering skills to refine the predictive models.

### DISCLOSURE OF THE INVENTION

An object of the present invention is to propose a simplified control management system whose users can interface with the system itself via inputs and outputs in natural language, i.e. for example by means of words and sentences that are easy to formulate and understand, pronounced verbally and/or written.

Another object of the present invention is to propose a simplified control management system that provides users with reliable predictions on the state of the infrastructures to which it is connected.

A further object of the present invention is to propose a system in which the reliability of the predictions can be assessed and improved by means of the supervision of users in natural language, or by means of very simple confirmation systems (e.g. clicks on buttons).

### BRIEF DESCRIPTION OF DRAWNINGS

The characteristics of the invention are highlighted below with particular reference to the attached drawings in which:
- figure 1 illustrates a schematic view of the logical architecture of the simplified control management system object of the present invention;
- figure 2 illustrates a schematic view of the logical architecture of a variant of the simplified control management system of figure 1;
- figure 3 illustrates a schematic diagram of an example of execution of the simplified control management method object of the present invention;
- figures 4 and 5 illustrate flow diagrams of respective examples of execution of the simplified control management method object of the present invention.

### DETAILED DESCRIPTION OF THE INVENTION

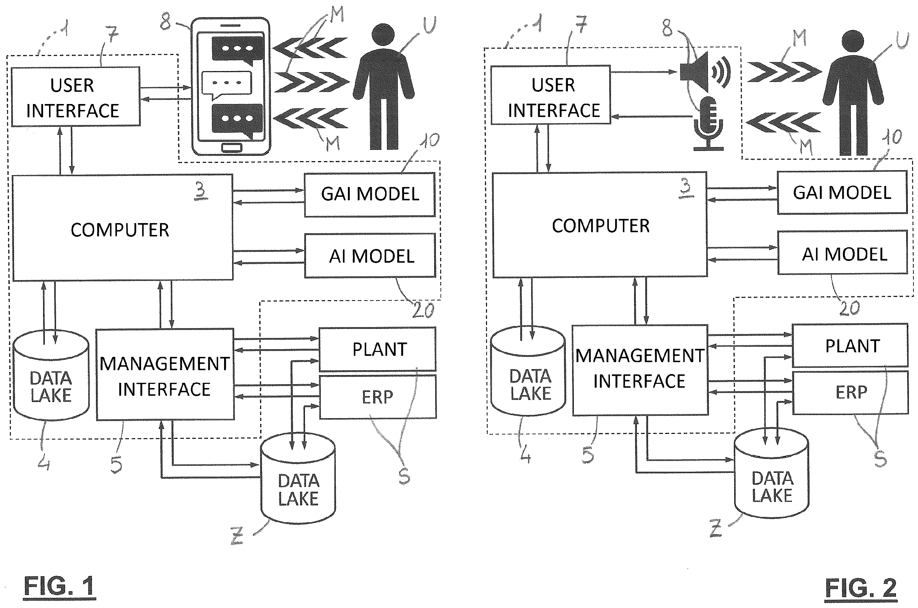

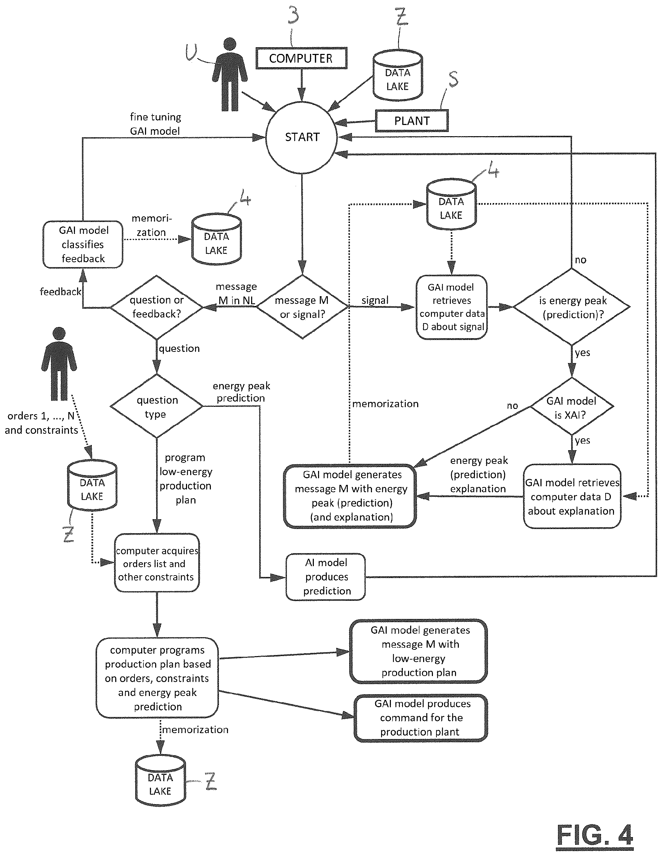

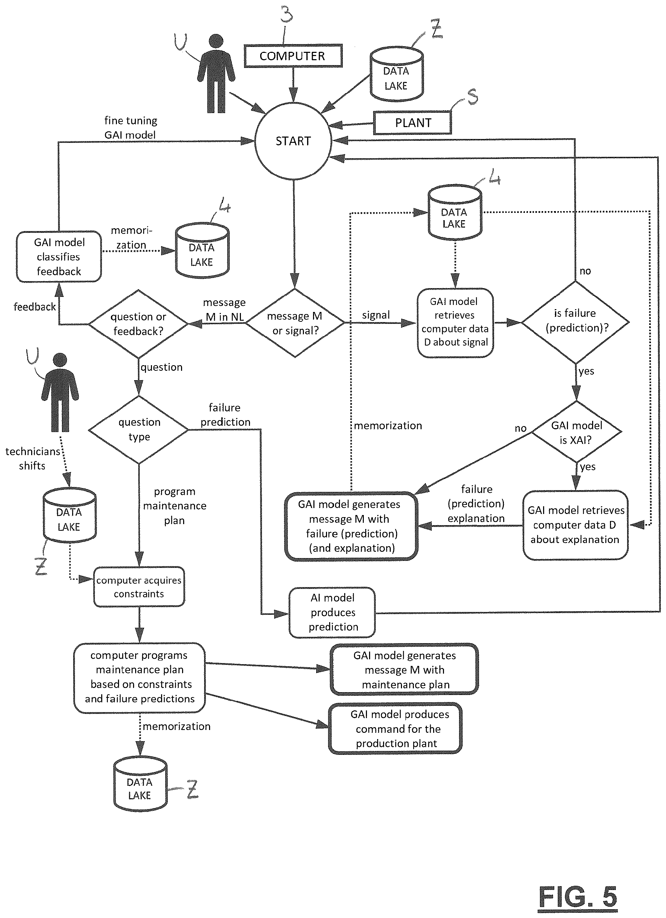

With reference to figures 1-5, numeral 1 indicates the simplified control management system which is the object of the present invention.

System 1 is assigned for the management of at least one work system S, external to system 1 itself. By "work system" S is meant, for example but not limited to, one or more of the following: an operating machine; an industrial processing and/or production plant; a programmable logic controller (PLC); a sensor; a microcontroller or similar electronic processor; a sensor or IoT device; a control unit; a computer; a peripheral; an electronic or electronically controlled device; and other similar devices. "Work system" S can also refer to a software, program or system, for example one or more of the following: a program for controlling a device, machine or plant; a data processing program; an enterprise resource planning or management program (so-called "enterprise resource planning" or ERP); a production execution system (so-called "manufacturing execution system" or MES); a so-called "computerized maintenance management system" or CMMS; a product life cycle management program (so-called "product lifecycle management" or PLM); a supervisory control and data acquisition system (so-called "Supervisory Control And Data Acquisition" or SCADA); a construction information modeling program (so-called "Building Information Modeling" or BIM); a so-called "energy management software" or EMS; a construction management system (so-called "building management system" or BMS); or other similar program or system.

Such work system S is preferably of an industrial type, i.e. installed and operating in an industrial environment, but it can also be assigned for different uses, for example civil, domestic or commercial.

The work system or systems S are connected, comprise or in any case are related to first memory means Z in which they store, temporarily or definitively, computer data D relating to the work systems S themselves, or digital data for example generated, collected and/or assigned for normal operation, data relating to events and constituting a register or so-called "log", historical data relating to measurements of parameters or relating to work cycles, data on energy production and/or consumption, data relating to environmental parameters, and so on. Such first memory means Z include one or more computer memories, volatile or non-volatile, such as for example RAM, ROM, hard disks, SSD, network disks, NAS, server, or others, of local, shared, remote type or even in the cloud.

The first memory means Z are respective to each work system S or shared between several work systems S. However, without compromising the intelligibility of the invention, the first memory means Z can be combined into a single logical entity, for example a database for storing structured data, or a so-called "data lake" for storing even unstructured data.

In its preferred embodiment, the system 1 object of the invention comprises at least the following components:
- a computer 3 assigned to perform operations on computer data D, where the computer 3 is for example a controller or a computer provided with one or more processors, one or more memories, and input and output means;
- a user interface 7 assigned for interaction between a user U of the system 1 and the system 1 itself;
- a management interface 5 assigned for the interaction between the system 1 and the at least one work system S and the first memory means Z.

The system 1 also implements a generative artificial intelligence model 10 adapted at least to:
- receiving from the user interface 7 messages M in natural language, provided by the user U to the user interface 7, and including respective intents and/or information;
- producing computer data D including data I, and/or requests R, and/or commands for the system 1, and/or for the at least one work system S, and/or for the first memory means Z, based on said intentions and/or information;
- forwarding said computer data D including data, requests and/or commands to the system 1, to the at least one work system S and/or to the first memory means Z to which they are addressed;
- collecting computer data D including data, and/or responses, and/or signals from the system 1, and/or from the at least one work system S, and/or from the first memory means Z;
- generating messages M in natural language for the user U including responses and/or information, based on said data, responses and/or signals;
- providing the user interface 7 with said messages M in natural language for the user U including responses and/or information.

In the context of this document, the verb "implement" is generally intended with the meaning of perform, comprise, be based on, be provided with, function by means of, be connected to, serve or make use of, and/or similar meanings known to the person skilled in the art. The meaning of the verb "implement" will also be more clearly deduced from the context of the invention described in detail in the following paragraphs.

In the context of this document, "natural language" (also referred to as "NL") generally means any form of expression by means of which a human user U can exchange information. Such forms of expression identifiable as natural languages include at least: text, handwritten or typed; words spoken orally; sounds; drawings; gestures; and other similar ones.

The computer 3, the user interface 7 and the management interface 5 are connected to each other, logically and possibly also physically. For example, computer 3 constitutes the central node of the topology of system 1, with the user interface 7 and the management interface 5 connected to said central node. Optionally, the user interface 7 and the management interface 5 are also directly connected or communicating with each other.

The system 1 includes the user interface 7 and the management interface 5 at least from a logical or systems point of view, while in the physical sense these interfaces can be hardware components and/or applications or software services running on different machines, even very distant from each other, but interconnected via a private or public network (for example the Internet) to form a so-called distributed system.

The management interface 5 is responsible for connecting the computer 3 with the work systems S and the respective first memory means Z. This management interface 5, therefore, includes at least one service or application suitable for managing the forwarding of data computer data D between the computer 3 and the work systems S. An example of such service is one or a set of application programming interfaces (so-called APIs) that allow the computer 3 to send commands to the work systems S or to the respective management systems or ERPs, to receive signals such as warnings or alarms from the work systems S, and to read and possibly write computer data D respectively from and into the first memory means Z, for example to collect or set computer data D about the operating parameters, work cycles, measurements carried out, and other information relating to the work systems S. The management interface 5 can also include the hardware possibly necessary to create the connection between the computer 3 and the work systems S and first memory means Z, for example gates, analog-to-digital converters, communication buses and other electronic input/output circuits.

The first memory means Z are preferably organized as data lakes that, compared to a database that allows the storage of structured data according to precise constraints, allow the storage of both structured data and semi-structured or unstructured data and of very different types, such as numerical data, texts, dates, but also images, videos and computer documents in general. The use of data lakes as the first memory means Z, therefore, makes the system 1 extremely flexible in terms of quantity and types of computer data D and messages M that it can process and manage.

To make the storage of files in the data lakes efficient, the management interface 5 or more generally the computer 3 implement functionalities and processes for the validation and cleaning of the input computer data D, especially if produced by third-party computer systems, in order to store such data in the data lakes in the most orderly and advantageous way. These features and processes are also suitable and adapted to produce specific requests or queries for data lakes, as the normal formulas used in database consultation are not valid for data retrieval or processing of information extracted from data lakes.

The user interface 7 comprises an interface means 8 preferably chosen from: APIs for access to a chat service, or a direct implementation of a real-time chat service or other type of synchronous communication, for example integrating or based on well-known and popular chat services including Whatsapp^{®}, Telegram^{®}, Viber^{®}, WeChat^{®}, Facebook^{®} Messenger, Slack^{®}, and Signal^{®}; APIs for sending messages or more generally for using a messaging or asynchronous communication service, for example based on SMS; control panel or dashboard, with information displays and input and command means, with discrete or touchscreen components; voice command, i.e. of the speaker and microphone type, respectively for the sound reproduction of messages M for the user U and for the reception of vocal messages M spoken by the user U, or of the so-called "smart speaker" type such as for example Amazon Alexa^{®}, Google Assistant^{®} or Apple Siri^{®}; display and keyboard, such as a computer terminal; tactile or "touchscreen" display with virtual keyboard and/or with a field for manually writing text; webcam and/or three-dimensional scanner for gesture detection; another similar type of graphical interface with input means, or so-called "graphical user interface"; or other similar means suitable for receiving and producing messages M in natural language and/or computer documents for communication with the user U and the interaction of the latter with the system 1.

Naturally, a hardware-type interface means 8 includes a logical part, i.e. a firmware with API service and/or software application, for managing the same.

Preferably, the interface means 8 also allows the exchange of computer documents (expressed directly as computer data D) between the user U and the system 1, in the form of attachments in a chat, in the form of print, and in other similar ways. Said computer documents include for example multimedia files, images, videos, text files, PDF format files, binary files, CSV format files, spreadsheets, and/or similar.

A variant of the user interface 7 provides that this includes multiple interface means 8 of different types, for example multiple chats on different services, or a chat and a smart speaker, or other combinations, where the interface means 8 are such as to allow, in addition to the exchange of messages M in natural language, also the exchange of computer documents. These interface means 8 are therefore suitable for exchanging computer documents and messages M in natural language with the user U by means of one or more expressive forms of natural language.

The interface means 8 provide the notable advantage of making the control of the system 1, and therefore the management of the work systems S, extremely simple for the user U.

The service or application relating to the logical part of the interface means 8, i.e. the software and API component, is preferably running or available for execution on the computer 3, or on a remote computer or server to which the computer 3 is connected. This service or application makes the messages M provided by the user U to the user interface 7 available for the computer 3 and more generally for the system 1, and vice versa.

The generative artificial intelligence model 10 (or "Generative Artificial Intelligence" model, so-called "GAI model") is a service or application or more generally an algorithm preferably running on the computer 3. This generative artificial intelligence model 10 is connected with the user interface 7, and therefore has access to and is accessible from the latter, directly or by means of the computer 3 or services running on the latter, to receive from and provide to the user interface 7 itself the messages M in natural language, respectively received from and addressed to the user U. Preferably, the generative artificial intelligence model 10 makes some APIs available for its usage by the computer 3; when the user interface 7 receives a message M from the user U, it passes the message M to the computer 3 which in turn forwards it to the generative artificial intelligence model 10.

In a variant of the system 1, this implements more than one generative artificial intelligence model 10, possibly based on different algorithms, e.g. for redundancy purposes, or trained on different data sets, e.g. each being trained with examples of a respective and specific language.

In fact, the model or at least one of the chosen generative artificial intelligence models 10 is preferably based and normally pre-trained on huge amounts of example data collected in so-called large language models (LLMs). Such LLMs are usually collected and managed by third parties; in any case, the data collected and produced during the operation of the system 1 can be used to improve the training of the generative artificial intelligence model 10, for example to adapt its operation to the specific field of application.

LLM is a generalized model that can perform both natural language understanding (NLU) and natural language generation (NLG) tasks.

NLU is suitable for tasks such as named entity recognition (NER), so-called sentiment analysis for extracting opinions from natural language input text, semantic understanding, text categorization, intent extraction, and others.

NLG is suitable for tasks such as creation of summaries, generation of responses in the form of chatbot, automatic preparation of reports, machine translation, and others.

Since an LLM integrates both the aforementioned NLU and NLG functions, it is clear that the use of an LLM as a generative artificial intelligence model 10 in the system 1 enables a natural language dialogue between user U and system 1 without necessarily separating the NLU and NLG functions by delegating them to different models or blocks. This allows, with extreme advantage, to obtain coherent and uniform responses in a dialogue between user U and system 1. The user U therefore observes an extremely simple and intuitive interaction with the system 1.

Equally advantageously, an LLM-type generative artificial intelligence model 10 can also automatically extrapolate information and consequently produce interpretation computer data D starting from inputs in a digital computer document format such as images, videos, text files, CSV files, spreadsheets, and/or similar.

This further broadens the scope of possible ways of interaction between the user U and the system 1. Alternatively, one or more blocks or models specifically developed for this purpose can be associated with the LLM to extract information from such input computer documents.

Variants of the generative AI model 10 provide that it is based on "Large Multimodal Models" (LMM), on transformer-based models, or on "Small Language Models" (SLM).

Some examples of generative AI models 10 are algorithms such as generative pre-trained transformers (GPT), BERT (Bidirectional Encoder Representations from Transformers), generative adversarial networks (GAN), or similar.

A variant of the generative artificial intelligence model 10 provides that this is a service running on a remote server owned and/or managed by the same owner or manager of the system 1 or even by third parties. The implementation of such model therefore occurs by means of the exchange of calls and data in network packets. From a logical or systems point of view, however, the generative artificial intelligence model 10 remains included within system 1.

In order to make the data stored in the first memory means Z and in other data lakes of the system 1 accessible to the generative artificial intelligence models 10 of the LLM type, such data lakes are preferably structured to represent the information in the form of a knowledge graph (KG), in order to build a semantic representation of the knowledge that allows an LLM to perform semantic searches and validate the data and, as explained below, the predictions of the artificial intelligence models 20 (especially machine learning) to decide the commands to be given to the work systems S and/or to the computer 3 and the information to be returned as output to the user U.

In addition to the preventive verification of the data by the LLM, the knowledge graph, if optionally integrated with appropriate traceability and control mechanisms, can advantageously support or provide an accounting or "accountability" function, ensuring traceability and transparency in the performance of data-based decision-making processes.

In particular, the knowledge graph:
- allows to trace the origin of the data, the transformations performed on them and their use, i.e. the fundamental elements for the purposes of demonstrating responsibility when it is necessary that the system 1 complies with predetermined regulations;
- can document and connect the decisions taken by the generative artificial intelligence models 10 and the artificial intelligence models 20, building and presenting an explanatory context aimed at making the decision-making processes more transparent and therefore understandable for the user U;
- facilitates the verification and audit of the processes, improving the ability to identify any errors and attribute any responsibilities.

The integration of a knowledge graph within a data lake still requires the mapping of unstructured or semi-structured data into a structured format to keep the data lake and the knowledge graph coherent and consistent. A KG therefore introduces complexity in terms of integration, scalability and updating of the data lake; on the other hand, it enables the semantic representation of information, a representation that the LLM uses for a better understanding and generation of messages M in natural language and for a preventive verification of data and predictions before transforming them into output computer data D.

Also but not exclusively in this regard, each LLM of the system 1 according to the invention preferably operates on the basis of Retrieval Augmented Generation (RAG) techniques in order to be able to realize the functions of understanding and generating natural language. In fact, an LLM must be very efficient in identifying and retrieving from the data lake the most relevant and pertinent data with a specific request, otherwise the response of the LLM will be incorrect or inapplicable and therefore irrelevant. Furthermore, an LLM must be able to understand the retrieved information and use it coherently.

Consequently, the LLMs of the system 1 also implement Dense Passage Retrieval (DPR) techniques, which allow to retrieve the most pertinent data from the data lake, and provide for the fine-tuning of the LLMs themselves by means of the retrieved data.

This fine-tuning and the feedback that, as explained below, is provided by user U to evaluate the functioning of the generative artificial intelligence models 10 lead to the construction of so-called Specialized Language Models (SLM) that guarantee greater versatility by adapting the responses to a specific operating context of the system 1, for example to specific work systems S, making commands and predictions more effective. For example, the system 1 is assigned to manage a work system S which is a machine whose energy consumption is intended to be tracked and optimized. Initially, the LLM of the system 1 responsible for managing the machine is likely pre-trained on a wide range of general data. As the system 1 remains in operation, the feedback collected from the user U, from a machine energy management device and from a maintenance manager allow the LLM to be fine-tuned, which progressively takes on the characteristics of a highly specialized SLM in responding precisely to questions relating to the energy management of that machine.

The actions or phases of receiving, producing, forwarding, collecting, generating, providing performed or executable by the generative artificial intelligence model 10, seen as a closed system or so-called "black box", give the model itself a conversion or translation functionality of natural language messages M into computer data D and vice versa, where such conversion or translation also includes:
- an interpretation of the intent and/or information in the natural language messages M received, and possibly in the computer documents received, to produce computer data D which are corresponding or as relevant as possible;
- an interpretation of the data, responses and/or signals in the computer data D collected, to generate messages M in natural language that correspond perfectly or are as relevant as possible.

Preferably, the intents in the messages M provided by the user U to the user interface 7 include or can be classified into at least one of the following typologies:
- queries, specifically regarding the system 1 or the work systems S, including requests for predictions P and/or analyses on the operating status of one or more work systems S, or of a general nature, for example requesting the exact time;
- commands, including commands for managing the operation of the work systems S or for managing the computer 3 or for carrying out operations by the latter.

Preferably, the information in the messages M provided by the user U to the user interface 7 comprises or can be classified into at least one of the following typologies:
- input, including data or values provided as any parameters, constraints or attributes associated with a query or command, or provided in response to an input request (so-called "prompt") presented by the system 1 to the user U;
- feedback, i.e. validations or evaluations, assigned at least for training or perfecting the functioning of the model or of at least one of the generative artificial intelligence models 10, and possibly of further artificial intelligence components of the system 1, as will be better specified below.

Said feedback information is evaluations or judgments on the accuracy or, more generally, on the quality of the messages M in natural language generated by a generative artificial intelligence model 10, and therefore on the "goodness" of the conversion or translation functionality of the latter. The evaluations, in particular, can concern both the information contained in a message M, i.e. the correctness of the data, responses and/or signals on the basis of which the message M was generated, and the linguistic or expressive form of the natural language of the message M generated. A feedback is expressed in natural language in a message M by the user U; once the computer data D relating to this message M has been produced, the computer 3 or the generative artificial intelligence model 10 itself are programmed to recognize that the type of information in said message M is a feedback; the computer data D obtained from this feedback are therefore retained or returned to the generative artificial intelligence model 10 which has carried out the conversion evaluated for the further training of the generative artificial intelligence model 10 itself, i.e. for its fine-tuning.

Should the intent in a message M from the user U include a question of a general nature, the generative artificial intelligence model 10 can optionally generate a response message M for the user U autonomously, without going through the forwarding of computer data D to the computer 3. For example, the generative artificial intelligence model 10 can search for a response among its own training data, or it can autonomously query a search engine or website.

A variant of the generative artificial intelligence model 10 provides that this is also suitable for producing computer data D comprising data, and/or requests, and/or commands for the system 1, and/or for the at least one work system S, and/or for the first memory means Z, based on the data, and/or responses, and/or signals collected by the system 1, and/or by the at least one work system S, and/or by the first memory means Z. For example, the generative artificial intelligence model 10 can autonomously and automatically produce a stop command of a work system S after collecting an alarm signal inherent to the same work system S.

Preferably, the system 1 further implements an artificial intelligence model 20 suitable at least for:
- receiving from the computer 3 input computer data D including at least one request for prediction or analysis and/or data;
- producing at least one prediction P or analysis on the functioning of the at least one work system S, and/or at least one command for the at least one work system S, based on said input computer data D;
- providing the computer 3 with output computer data D including at least one response containing said at least one prediction P or analysis, and/or said at least one command.

More preferably, each request for prediction P or analysis concerns or has as its object at least one between the operating status, operation planning, energy consumption, and/or possible failures or anomalies of the at least one work system S; each command comprises at least one of adjustment, start and/or interruption of the operation of the at least one work system S.

For example, a message M from the user U such as "When will the current work cycle on the packaging plant end?" contains the intent to obtain an analysis or information about the "end time", to be carried out according to the constraints imposed by the attributes "work cycle" (which identifies the object of the prediction P) and "packaging plant" (which identifies the work system S to which the object of the prediction P belongs), also contained in the message M. The intent and the parameters are extracted as computer data D from the message M via the generative artificial intelligence model 10; the computer 3 can carry out operations on such computer data D, such as parsing, filtering, corrections or others better specified below, before forwarding them to the artificial intelligence model 20 as input computer data D to obtain the required analysis from it.

Similarly, a message M such as "If the speed of the conveyor belt is increased by 10%, when is the next bearing failure expected?" contains the intent to obtain from the artificial intelligence model 20 a prediction P on the "next failure", a prediction to be made according to the constraints represented by the attributes "speed", "10% increase", "conveyor belt", "bearing".

As a further example, a message M of the type "Turn off the heating system when the temperature reaches twenty degrees" represents the intent to give the work system S "heating system" a "switch off" command subjected to the condition of reaching the value "20 °C" by the parameter "temperature". The artificial intelligence model 20 will provide the computer 3 with a response whose output computer data D, possibly manipulated by the computer 3, contain a command to be provided to the work system S "heating system" or to the respective ERP for management of the work system S itself.

The artificial intelligence model 20 provides the advantage of further simplifying the management of the work systems S by the user U, who can control and manage them using the natural language to which they are more accustomed, and with the decision support provided by the predictions P, analyses, alerts and other information produced by the artificial intelligence model 20 itself. The user U, therefore, does not have to worry about carrying out complicated data collection, statistical calculations and estimates themselves to manage the work systems S, with a notable saving of time and resources and a clear increase in the productivity of the user U.

The artificial intelligence model 20 is preferably a service or application or more generally an algorithm running or executable on the computer 3, or and preferably it is running or executable in the cloud or on a remote server owned and/or managed by the same owner or manager of the system 1 or even third parties.

Preferably, the artificial intelligence model 20 is a so-called "cloud computing" service, i.e. "cloud-based" or "server-based", made available by a respective supplier; the computer 3 therefore communicates via the Internet with this artificial intelligence model 20 for the implementation of the latter.

Alternatively, variants of system 1 provide that at least one between the generative artificial intelligence models 10 and the artificial intelligence models 20 is executed in "edge computing" mode or environment, to minimize the latency, which sometimes is relatively significant, that can occur between requests and responses if such models are executed in the cloud or in a centralized manner. In this way, the natural language interface with the user U and the processing of predictions and commands is extremely fast and fluid; this also allows the system 1 and its functions to be integrated even in locations or scenarios where the Internet connection is slow, intermittent or unreliable. In this regard, the system 1 preferably implements a so-called edge adapter of the software module type, possibly executed on a specific hardware, which is able to at least:
- compressing one or more of the generative artificial intelligence models 10, by means of techniques such as the so-called knowledge distillation or quantization, to reduce energy consumption and computational load during inference and fine-tuning;
- mapping relevant portions of a third-party external data lake into a compact, application-specific data lake optimized for use in edge computing environments.

The edge adapter therefore allows the complex calculations of models 10, 20 to be performed in edge computing mode even on machines physically close to processor 3 (if not on the latter) without resorting to dedicated and specialized cloud servers, for which latency could be unacceptable.

Regardless of the position in which the artificial intelligence model 20 is physically running, i.e. whether it can be executed on the computer 3 or on machines physically external and extraneous to the system 1, the artificial intelligence model 20 can be considered part of the system 1 at least from the logical point of view, being implemented and questioned thereby. However, the artificial intelligence model 20 can also be interpreted as an entity external to system 1 but connected to it and questionable by it, without thereby changing the meaning of the invention.

The artificial intelligence model 20 is accessible via APIs for its use by the computer 3, and, similarly to the generative artificial intelligence algorithms or models 10, it is generally pre-trained on enormous quantities of data. Alternatively, or in addition and preferably, the artificial intelligence model 20 is trained on the basis of data collected and produced during the operation of the system 1. This last solution provides the advantageous possibility that the artificial intelligence model 20 is trained via sets of data relating for example to operating parameters, energy consumption, failure or malfunction events, state of health i.e. wear of components, and/or other similar parameters or operating states of one or some specific work systems S, or "tailor-made" and adapted to the latter, with the consequence that the responses containing predictions, analyses and commands processed and generated by the artificial intelligence model 20 itself thus trained will be more accurate and relevant to the specific system 1 compared to the responses provided by artificial intelligence models 20 trained on generic datasets.

Regardless of the pre-training or initial training, the artificial intelligence model 20 can be further trained, refined or fine-tuned on the basis of further computer data D provided to it by the computer 3 during the operation of the system 1, obtained for example from the work systems S or from the first memory means Z associated therewith. Given the nature of the artificial intelligence model 20 and the generative artificial intelligence model 10, it is also possible that these are trained to perform further tasks, in particular for the prediction or analysis of new parameters or behaviours of a work system S, for the management and interaction of new work systems S, for the tuning of management processes, and so on.

Furthermore, a variant of system 1 provides that the user U can provide feedback F messages M to evaluate the responses obtained, assigned for training the artificial intelligence model 20 in order to improve the quality of predictions, analyses and commands, or even to enable the production of such or other predictions by means of comprehensive training.

In an embodiment, system 1 monitors in real time the operation or failures of a work system S during a period of several months, and the user U supervises the monitoring by evaluating the different events via feedback messages M; at the end of this period, the artificial intelligence model 20 is sufficiently trained to be able to predict operation or failures in advance, by monitoring the work system S itself. Further feedback messages M from the user U on predictions P will refine the quality of future predictions P.

A variant of the invention also provides that the user U provides suggestions or indications, via feedback messages M, on which parameters of the work system S among those monitored, on which statistical, processing or filtering operations, and in general on which characteristics or so-called "features" an artificial intelligence model 20 can or should base its predictions on. This provides system 1 with a further degree of freedom, as the user U can also regulate the functioning of an artificial intelligence model 20 by directing its learning based on their own personal experience.

In a variant of the system 1, this implements multiple artificial intelligence models 20, possibly trained on different data sets and based on different algorithms, each being assigned or particularly suitable for carrying out specific tasks or functionalities, for example the production of a specific prediction P or the analysis of a specific industrial process.

The artificial intelligence model or models 20 are preferably chosen from artificial intelligence (AI) and/or machine learning (ML) models or algorithms based for example on classifiers, regressors, clustering algorithms, neural networks, reinforcement learning, ensemble learning methods, or similar.

A request in the input computer data D may derive directly from a corresponding request included in the computer data D that has been produced by a generative artificial intelligence model 10 based on an intent, which in turn comprises a corresponding query, in a message M by the user U. Alternatively or in addition, a request in the input computer data D can be produced automatically by the computer 3, for example in the case in which this is programmed to periodically request an analysis of the operating state or a prediction P on possible failures relating to a work system S.

The data in the input computer data D can derive from a message M from the user U, being provided as parameters or constraints of a query, simultaneously with the submission of the question itself or even subsequently upon request by the artificial intelligence model 20, which signals to the computer 3 the need for further input computer data D to produce the required prediction P or analysis. The data in the input computer data D can also be provided automatically by the computer 3, which recognizes the need thereof for a given analysis or prediction, or upon invitation of the artificial intelligence model 20 or the generative artificial intelligence model 10.

The predictions or analysis provided in a response in the output computer data D may be in numerical, textual or other form, and may also consist of or be associated with a warning or alarm signal assigned to inform and alert the user U about an anomalous behaviour or functioning, foreseen or found and already in progress, of a work system S. The computer 3 forwards such output computer data D containing the response with the required prediction or analysis, and/or with the signal notice, to the generative artificial intelligence model 10; the latter then generates a message M in natural language based on a response with the respective prediction or analysis, and/or based on the information constituted by the respective signal, and provides such generated message M to the user interface 7 for delivery to the user U.

The commands in the output computer data D provided by the artificial intelligence model 20, however, are directly passed from the computer 3 to the respective recipient work system S by means of the management interface 5.

By way of example, user U submits the message M to the user interface 7: "When is the next failure of a press in the plant expected?". The intent in the message M includes the query for a failure prediction on the work system S "plant", which is inserted as a request in the computer data D produced by the generative artificial intelligence model 10. The computer 3 forwards such query for "failure prediction" in the computer data D input to the artificial intelligence model 20, possibly inserting the "press" and "plant" attributes among the parameters of the API call of the latter, and upon invitation of the artificial intelligence model 20 retrieves the historical operating data of the presses from the work system S or from the related first memory means Z, to then provide such historical data to the artificial intelligence model 20 in further input computer data D; alternatively, the computer 3 automatically recognizes that such historical data must be associated with a "failure prediction" request, therefore retrieves such data and directly provides to the artificial intelligence model 20 both the prediction query and the necessary historical data in the same packet of input computer data D. The artificial intelligence model 20 processes the required prediction P, for example estimating an imminent failure of a press in the plant within 5 minutes. Therefore, the output computer data D includes a response, containing a positive response to the requested prediction, the related time data "5 minutes" and an associated alarm signal, and a command to stop the operation of the plant. The computer 3, having received the output computer data D, forwards the response to the generative artificial intelligence model 10 for presentation to the user U, while forwarding the command to the work system S "plant" by means of the management interface 5.

The functioning of the artificial intelligence model 20, and more generally of the system 1, will be illustrated in more detail by means of further examples of implementation of the system 1 reported below.

It is optionally provided in the system 1 that the commands produced by the artificial intelligence model 20 and assigned for the work systems S can or must be previously screened by the user U passing through the generative artificial intelligence model 10 and the user interface 7. With reference to the example just presented, the user U, having received the prediction P and the signal of imminent failure, can verify in the plant the actual existence of the anomaly signalled by the prediction P, and based on this verification they can confirm or revoke the stop command for the work system S.

Preferably, in addition to providing the said conversion functionality between messages M in natural language and computer data D, the generative artificial intelligence model 10 indicates or suggests to the computer 3 which computer data D to retrieve from the first memory means Z, and which of the artificial intelligence model or models 20 to use to produce a required prediction P. In fact, the generative artificial intelligence model 10 is preferably configured and programmed to know the artificial intelligence models 20 implemented by system 1, the work systems S managed by the system 1, and the data relating to the work systems S retrievable therefrom or stored in the first memory means Z. In this way, based on the intent in a received message M, the generative artificial intelligence model 10 can for example identify the type of computer data D required for a given prediction P and the most appropriate artificial intelligence model 20 for the prediction P itself.

Furthermore, the generative artificial intelligence model 10 can also directly compose the API calls or so-called "queries" for the work systems S, the first memory means Z and/or the artificial intelligence models 20, if it is trained to know said APIs and the syntax for queries; the computer 3 thus only has the task of forwarding these queries to the correct recipient. Possibly, the computer 3 carries out a formal check to evaluate the correctness of the queries, and in case of errors it extracts the parameters and reinserts them in new queries correctly reformulated and formatted.

The user interface 7 distinguishes messages M in natural language, which it provides to the generative artificial intelligence model 10 for conversion, from computer documents. In particular, a computer document can be provided by the user interface 7 directly to the computer 3 for its processing or use, or it can equally be subjected to the generative artificial intelligence model 10 so that it identifies the most suitable artificial intelligence model 20 for analysing the document itself.

Preferably, the at least one artificial intelligence model 20 is of the Explainable AI type (or so-called XAI) or of a similar type.

For at least one, or preferably for each prediction P, analysis or command produced and provided in the output computer data D, such XAI model 20 also produces a respective description or explanation, which associates with the prediction P, analysis or command in the output computer data D.

Such description or explanation reports, in more or less detail, the logical procedure that the XAI-type artificial intelligence algorithm or model 20 followed from receiving the request to producing the response.

The description or explanation is obviously expressed in the so-called machine language, i.e. expressed in terms of the computer data D relating to it. This description is therefore assigned to be then translated or converted into an explanation message M generated in natural language for the user U by the generative artificial intelligence model 10 on the basis of said description.

Data that allows the generative artificial intelligence model 10 to convert the description into natural language, such as training data or examples of machine language to natural language correspondences, is optionally stored separately from the remaining training data of the generative artificial intelligence model 10, for example in second memory means 4 of the system 1, local or remote, to which the computer 3 pertains or is connected. More generally, the generative artificial intelligence model 10 optionally saves in and collects from the second memory means 4 at least part of the computer data D necessary for its own operation, including the correspondences between messages M and computer data D already validated by means of positive feedback from the user U.

In this way, the user U can not only obtain the required information, prediction P or analysis related to the work system S, but can also explicitly know how the artificial intelligence model 20 arrived at the response itself, i.e. can trace back to the "reasoning" or inference that led the XAI model 20 to produce a certain prediction P, analysis or command.

For example, for artificial intelligence models 20 of the XAI type based on decision trees, such "reasoning" is reconstructed by following the path along the nodes of these decision trees from the leaf to the root, i.e. from the response to the request.

Furthermore, the response produced on the basis of the description or explanation generated by the XAI-type artificial intelligence model 20 may also include the result of the inference of the XAI models 20 chosen and used, and indications of one or more ways in which the user interface can conveniently represent such results: for example, statistical data will be conveniently presented via histograms, bar graphs or similar; data on the temporal trend of one or more quantities measured on the working system S will be displayed preferably as a curve as a function of time.

XAI-type models that can be included among the artificial intelligence models 20 of the system 1 are for example decision trees, linear regression, RuleFit, Bayesian Neural Networks, LIME, SHAP; the explainability of the models can also be added with further techniques such as anchors, counterfactual explanations, feature visualization, attention mechanisms, and/or similar.

Advantageously, the use of XAI models implementing SHAP, LIME or other similar tools or mechanisms, in combination with the LLM of the generative artificial intelligence model 10 and the semantic representation of data by means of knowledge graphs in the data lakes of the storage means Z, 4 allow the results of the artificial intelligence models 20 to be explainable even to managers and technicians with no or limited skills in data analysis.

The following example demonstrates the convenience of using one of these XAI models in system 1. An artificial intelligence model 20 of the ML and XAI type produces a prediction according to which a machine S will require maintenance within the next 20 hours. The SHAP mechanism of the same artificial intelligence model 20 establishes that the attributes that most influence the production of this prediction are called (in the context of the system 1 of this example) "vibrations", "work_time", "t_op", "oil_p", "motor_speed", and each of them is associated with a value, respectively +14, -5, -2, +2, +1. In this context, an expert data scientist would be able to draw useful conclusions from the set of attributes and their respective values and translate such data into operational indications, for example: "machine vibrations are below the critical threshold, suggesting that there are no signs of impending failure associated with significant mechanical problems; the number of machine operating hours is close to the expected useful life limit, thus increasing the risk of failure; the operating temperature is higher than normal, indicating that the machine may be under thermal stress and contributing to a reduction of the Remaining Useful Life (RUL) of 2 hours; the oil pressure is within optimal limits, suggesting that the lubrication system is functioning properly; the engine speed is stable and does not show significant variations". The system 1 of the invention, thanks to the artificial intelligence models 20 and the generative artificial intelligence model 10 implemented as described, allows to automatically provide an explanation similar to that exemplarily produced by the expert data scientist.

A generative artificial intelligence model 10 of the LLM type of the system 1 can therefore understand and decide autonomously which specific artificial intelligence model or models 20, preferably ML and/or XAI, to select and use to respond to each request of the user U, based on the intents and/or information provided by the user U in natural language. The LLM model 10 communicates the selected XAI model 20 to the computer 3, which can autonomously and automatically retrieve the computer data D necessary to obtain the requested predictions by means of the specific artificial intelligence model 20 XAI. It follows that, in summary, the operations that the computer 3 can perform also include the operation of performing inferences on, or obtaining predictions from, the artificial intelligence models 20 identified by the generative artificial intelligence model 10.

Since preferably the system 1 implements several different ML (and possibly XAI) artificial intelligence models 20, up to several dozen or several hundreds, it is clear how advantageous it is for an LLM of the system 1 to be able to autonomously recognize the ML model to be queried as most suitable for a specific processing or prediction. Clearly, it is necessary for each LLM to be properly trained in order to be able to correctly select among the various artificial intelligence models 20, for the post-processing of the results provided in response by each of these models to translate these results into appropriate commands and/or responses for the user U, and so on.

Therefore, the LLM does not perform and is not able to perform predictions, but manages and directs the various ML artificial intelligence models 20 implemented for predictions. The orchestration of ML models is therefore automatic and carried out by the LLM model and the computer 3, and allows to automatically retrieve from the data lake (and from the related knowledge graph) the data necessary for the predictions, execute the inferences, send the appropriate commands to the work systems S and return the answers and results to the user U.

The operations that can be performed by the computer 3 preferably include at least the following:
- acquisition, i.e. reception, of computer data D from the user interface 7, from the management interface 5, from the generative artificial intelligence models 10, and/or from the artificial intelligence models 20, if implemented by the system 1;
- transfer, i.e. transmission, of computer data D to the user interface 7, to the management interface 5, to the generative artificial intelligence models 10, and/or to the artificial intelligence models 20, if implemented;
- call of computing (IT) functions or APIs of the user interface 7, of the management interface 5, of the generative artificial intelligence models 10, and/or of the artificial intelligence models 20, if implemented; in particular, as already mentioned, the computer can thus perform inferences on the artificial intelligence models 20 identified by the generative artificial intelligence model 10;
- storage of computer data D in the second memory means 4;
- analysis and/or manipulation of computer data D according to predetermined algorithms, stored for example in the second memory means 4 and executable by the computer 3;
- execution of computing functions of the computer 3 itself;
- generation of computer data D;
- extraction of data, requests, responses, signals, alarms, warnings, commands, and other types of information from computer data D.

The acquisition, transfer and storage operations of the computer data are carried out by the computer 3 for example to communicate with the work systems S and with the various interfaces, and to save in the second memory means 4 computer data D useful or necessary for the functioning at least of the computer 3 itself, and more generally of the system 1.

Call operations include, for example, calling functions of the APIs of the various interfaces, for example by formulating queries. The call of a function executed by the computer 3 can correspond to an intent expressed by the user U, for example to obtain a prediction P on the functioning of a work system S from an artificial intelligence model 20, or it can be executed on the basis of warning computer data D generated by a work system S, or again such call can originate from a signal produced within the computer 3 itself.

The manipulation operations include the application of computer data D in algorithms executed within the computer 3, i.e. algorithms that do not require the specific functionalities of dedicated services such as artificial intelligence models 20 or generative artificial intelligence models 10. Such manipulations are for example mathematical operations, statistical calculations, parsing or syntactic analysis of computer data D, and so on.

The operations of calling or executing computing functions include the possibility of performing inferences on the ML artificial intelligence model 20, among all those implemented, identified by the LLM generative artificial intelligence model 10 to respond to a request from the user U, and the possibility of generating semantic representations of the data (i.e. knowledge graphs) integrated with the data lakes.

The generated computer data D include those for the execution of the said inferences, i.e. those that the computer 3 itself uses for queries to the data lakes, knowledge graphs and artificial intelligence models 20. Furthermore, the computer 3 can generate computer data D for its normal operation and to perform other processes.

Data extraction includes the possibility of validating the data itself, and possibly cleaning it, on the basis of the semantic representation defined by the knowledge graphs in the data lakes.

Response extraction includes the extraction of the results of the said inferences, possibly post-processed, for example validated by means of the use of knowledge graphs and combined with each other.

The second memory means 4 include one or more computer memories, volatile or non-volatile, such as for example RAM, ROM, hard disks, SSDs, network disks, NAS, servers, or others, of local, shared, remote type or even in the cloud.

In a variant of the system 1, the second memory means 4 also host databases or data lakes specifically reserved for the data sets for the training and/or operation of the generative artificial intelligence models 10 and/or the artificial intelligence models 20. The second memory means 4 are preferably structured as data lake, in the ways and with the consequent advantages already described for the first memory means Z.

For example, the same message M in natural language from user U can contain both a request and input data provided by user U themselves and usable by system 1 as arguments or parameters of the request. The computer 3, or directly the generative artificial intelligence model 10, will take care of dividing the computer data D produced by the generative artificial intelligence model 10 into computer data D containing the request and computer data D containing the respective parameters.

A variant of the system 1 provides that the at least one generative artificial intelligence model 10 and the at least one artificial intelligence model 20 are included within the same application which implements the functionalities of both the aforementioned models. The services or applications related to the user interface 7 and the decision-making interface 13 can remain distinct, for example different APIs, or consequently coincide in a single collection of APIs, for example providing different functions depending on whether a prediction P is required on the functioning of a work system S or a conversion between computer data D and messages M in natural language.

In another variant of the system 1, the at least one generative artificial intelligence model 10 and the at least one artificial intelligence model 20 implemented by the system 1 can communicate directly with each other by means of predetermined application interfaces or APIs, so that the exchange of computer data D does not necessarily have to be mediated by the computer 3. For example, the generative artificial intelligence model 10 can directly query an XAI-type artificial intelligence model 20 to obtain a response to a question posed by the user U, with the relevant inference.

Similarly, it is possible that the at least one generative artificial intelligence model 10 is directly connected to a work system S and/or to the first memory means Z for the relative command or retrieval of computer data D.

In a further variant of system 1, the computer 3 is programmed to periodically retrieve from the first memory means Z computer data D relating to the operating status of the work systems S, and submit such computer data D to an artificial intelligence model 20 requesting a prediction P about possible failures of the work systems S. If the response provided by such model indicates that a failure, malfunction or other anomaly on a work system S is probable and imminent, or if the response itself contains an alarm signal, the computer 3 sends a warning to the user U, translated into a message M in natural language by means of the generative artificial intelligence model 10. In this way the system 1 can provide predictions P even if not requested by the user U, putting the latter on alert, and therefore acts proactively.

Furthermore, optionally, the message M can contain suggestions of possible commands to be given to the work system S to avoid the expected failure; the user U can supervise the reaction of system 1 to the failure prediction P by confirming or inhibiting the proposed commands.

Generally, known systems such as the one described in US2020026733A1 provide that for the selection and execution of a command or prediction request the system performs a mapping between the natural language inputs and at least one so-called "dialogue template" by means of a scoring procedure. Differently, in the system 1 of the present invention such mapping is performed automatically by the LLM by inferring the intents in the natural language input messages M and communicating such intents to the computer 3, which, using its own functions or one or more artificial intelligence models 20 (also XAI), decides whether and which commands and/or prediction requests to execute, and any additional parameters or attributes necessary.

The object of the present invention is also a method for the simplified control management of at least one work system S afferent or connected to the first memory means Z for computer data D.

The method can be performed using a system 1 as described above, i.e. comprising:
- a computer 3 assigned to perform operations on computer data D;
- a user interface 7 assigned for interaction between system 1 and a user U of the system 1 itself;
- a management interface 5 assigned for interaction between the system 1 and the work system S and the first memory means Z.

As already illustrated, the computer 3, the user interface 7 and the management interface 5 are interconnected.

The method includes the following phases, achieved or achievable by means of at least one generative artificial intelligence model 10 implemented by the system 1:
- receiving from the user interface 7 messages M in natural language provided by the user U to the user interface 7 and including intents and/or information;
- producing computer data D including data, requests and/or commands for the system 1, the at least one work system S and/or the first memory means Z on the basis of said intents and/or information;
- forwarding said computer data D including data, requests and/or commands to the system 1, to the at least one work system S and/or to the first memory means Z;
- collecting computer data D including data, responses and/or signals from the system 1, from the at least one work system S and/or from the first memory means Z;
- generating messages M in natural language for the user U including responses and/or information based on said data, responses and/or signals;
- providing the user interface 7 with so-called messages M in natural language for user U including responses and/or information.

The phases of the method can also be performed in a different order from the one presented, and can also be performed only partially. The phases are also repeatable as long as the method is running on system 1. Between each repetition, the method awaits to receive further messages M or computer data D.

For example, it is possible that, as a consequence of a signal produced by a work system S and retrieved by the computer 3, the system 1 carries out, in a cycle of the method assigned to the generative artificial intelligence model 10, exclusively the phases of collecting the computer data D relating to said signal, to generate a corresponding message M in natural language, and to provide such message M to the user interface 7 for its presentation to the user U.

Preferably, the method object of the invention also includes the following phases, carried out or achievable by means of at least one artificial intelligence model 20 implemented by system 1:
- receiving from the computer 3 input computer data D including at least one request for prediction P or analysis and/or data;
- producing at least one prediction P or analysis on the functioning of the at least one work system S, and/or at least one command for the at least one work system S, based on said input computer data D;
- providing the computer 3 with output computer data D including at least one response containing said at least one prediction P or analysis, and/or said at least one command.

Preferably, the phase of producing predictions P, analyses or commands also involves, for at least some of the predictions P, analyses or commands produced, producing a respective description, which is included in the output computer data D.

Consequently, the phase of generating messages M also involves generating an explanation message M in natural language for the user U based on said description, where the at least one artificial intelligence model 20 is of the Explainable AI (XAI) type or similar.

In light of what has been described, the system 1 according to the invention, with the related simplified control management method, is suitable to be used for the management of at least operation, operation planning, energy consumption, possible faults or anomalies, and/or the maintenance status of at least one work system S, in particular in the case of industrial work systems S, where the control of the management system 1 is simplified thanks to the interaction with the user U in natural language made possible by the generative artificial intelligence model 10, contrary to known management systems which allow limited management of industrial work systems only via dashboards or complicated software with limited potential and expandability.

Said uses of system 1 and the method constitute at least a subset of the uses or preferred and advantageous applications of system 1 and the method. Furthermore, control is further simplified by relying on the artificial intelligence model 20 for predictions and analyses.

Some preferred examples of implementation and application of the simplified control management system 1 and execution of the simplified control management method which are the subject of the present invention are illustrated below.

### Example 1

In one embodiment of the invention, a system 1 is employed for managing a work system S which is a production plant.

A user U of system 1 wants to achieve the objectives of reducing peaks in energy consumption related to the operation of the plant and of optimizing the production of plant S.

The plant S stores in a data lake in its first memory means Z computer data D representing data and other information on the operation of the plant S itself such as starts, interruptions, process speed, energy consumption, material consumption, duration of production cycle, and other operating parameters.

Furthermore, computer data D constituting constraints for regulating the operating parameters of the plant S can be inserted into the first memory means Z, for example production cycle schedules, orders, production orders, limits on energy consumption, maximum time within which a cycle must end, and so on.

The plant S and the first memory means Z can be controlled by means of a respective ERP type software, which can either be running on a dedicated computer or on the computer 3 of the system 1.

The management interface 5 of the system 1 consists of an API for communication between the computer 3 and the ERP of the system S, and therefore allows the computer 3 to interact with the plant S and the first memory means Z, exchanging computer data D with them. The ERP is however accessible even without the intermediation of the system 1, therefore an operator of the plant S can enter the orders, constraints, and so on directly into the ERP.

The user interface 7 of the system 1 includes an API for a chat service, such as WhatsApp^{®}, which serves as an interface means 8 for sending and receiving natural language messages M.

The system 1 implements a generative artificial intelligence model 10 of the LLM type running on computer 3. Of course, model 10 could also be of another type, for example LMM, transformer-based or SLM, and possibly executed on a machine distinct from computer 3 but logically connected thereto.

The system 1 also implements an artificial intelligence model 20 of the XAI type which is an application running on a remote server, and with which the computer 3 can interact via the Internet.

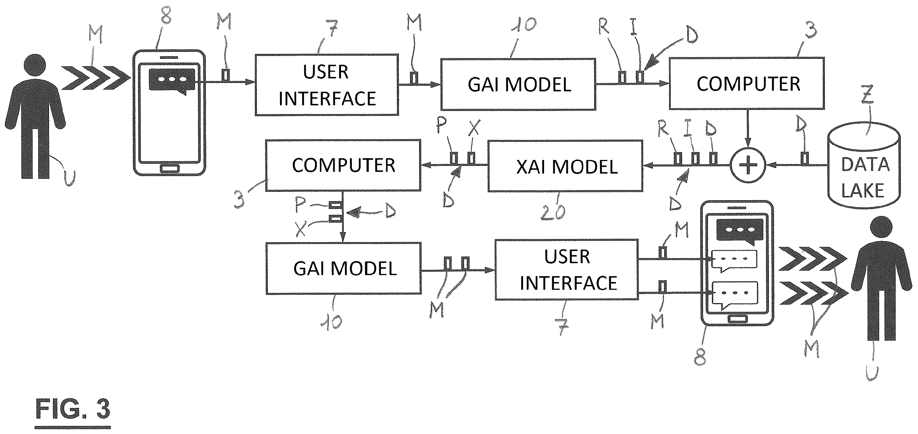

Making particular reference to figure 3, to manage the plant S, the user U types a message M into the chat containing, in natural language, a question whose intent is to find out when the next energy peak will occur, i.e. when the energy consumption of the plant S will exceed a certain threshold value numerically indicated in the message M itself as input data.

The user interface 7 provides, by means of the computer 3, the received message M to the generative artificial intelligence model 10, which carries out the conversion and forwards to the computer 3 computer data D representing two objects, respectively the request R based on the intent comprising the query and the data I based on the information comprising the threshold value to be used as input data. Among the computer data D, the generative artificial intelligence model 10 inserts information or metadata indicating the artificial intelligence model 20 suitable to satisfy the request, and the data necessary for the prediction P contained in the first memory means Z.

By calling a function of the management interface 5, the computer 3 retrieves from the first memory means Z, and possibly directly from the plant S, the computer data D relating to the evolution of one or more parameters of the manufacturing process, including instantaneous energy consumption.

The computer 3 then sends input computer data D to the artificial intelligence model 20, including the request and the related attributes represented by the threshold value and by the process parameters. The artificial intelligence model 20 processes the input computer data D, recognizes the request and the attributes to be used, and by means of the execution of one or more suitable algorithms produces the requested prediction P, then providing it with the associated explanatory description X of the "reasoning" to the computer 3 in a response included in the output computer data D.

The computer 3 provides these output computer data D to the generative artificial intelligence model 10. Once the conversion into natural language has been carried out, the user interface 7 sends two messages M in the chat, containing respectively the response with the prediction P on the next energy peak and the description of the way in which such prediction P was made. At the same time, the computer 3 stores the machine language-natural language association relating to the description in the second memory means 4.

Based on the prediction P obtained, the user U decides to slow down the speed of the process in order to avoid reaching the threshold value in the energy consumption of the plant S. Therefore, the user U sends in the chat a further message M containing the intent of the command to reduce said speed by a predetermined percentage, indicated numerically.

The generative artificial intelligence model 10 forwards to the computer 3 the computer data D obtained from the conversion of this request.

The computer 1 analyses the computer data D and recognizes a command for the plant S, and therefore forwards such command to the plant S by means of the management interface 5. As a result, the process speed of the plant S is decreased, and the new speed value is stored in the first memory means Z.

The user U, possibly, provides the system 1 with a feedback message M on the linguistic and/or substantial quality of the prediction P received, for the so-called fine tuning, respectively, of the generative artificial intelligence model 10 and/or of the artificial intelligence model 20. The generative artificial intelligence model 10 itself can evaluate whether the feedback contained in the message M is directed at its own training or at the training of the artificial intelligence model 20.

### Example 2

Referring to the topology of the system 1 described in Example 1 and to the succession of phases or actions described in the same Example 1, in a variant of the invention system 1 is used to optimize the production of plant S.

The user U, by submitting a message M to the user interface 7, asks the system 1 to program a low energy consumption production plan. The message M is converted into corresponding computer data D by the generative artificial intelligence system 10. The latter indicates to the computer 3 which computer data D to recover from the first memory means Z, possibly forwarding also the query to be used to the computer 3; consequently, the computer 3 acquires from the first memory means Z a list with the orders to be included in the production plan. Alternatively, these orders are provided by the user U via further messages M.

The computer data D relating to the orders and the prediction P on the energy peaks produced by the artificial intelligence model 20 are transferred to the ERP of the plant S, which, taking into account the constraints provided, processes the requested production plan and stores it in the first memory means Z. Alternatively, the computer 3 can also be programmed to be able to process the production plan itself.

The computer 3 retrieves the computer data D relating to the production plan and provides them to the generative artificial intelligence model 10, which:
- generates a message M in natural language for the user U which describes the planned production plan;
- provides said message M to the user interface 7 to deliver it to the user U;
- informs the computer 3 that, according to the production plan, the plant S needs to be started to manage an order.

The computer 3 then sends an appropriate command to the plant S using the management interface 5.

The regulation of the operation of the plant S will then be managed by the respective ERP, or even by the generative artificial intelligence model 10 by sending signals or alerts to the computer 3 assigned to the control of the plant S itself.

### Example 3

Referring again to the topology of the system 1 described in Example 1, in a variant of the invention the system 1 is used to optimize the maintenance of the plant S.

A user U of the system 1 wants to achieve the objective of reducing failures of the plant S, carrying out the necessary maintenance interventions in advance and thus reducing the downtime of the plant S itself to a minimum.

In this regard, the user U types a message M in natural language into the chat, containing a question whose intent is to find out when and on which component of the plant S the next fault is expected.

By means of the already described phases of reception and conversion of a message M from natural language into machine language, identification of the intent, recovery from the first memory means Z (or from the ERP relating to them) of computer data D relating to the state of health of the plant S (i.e. relating to the wear of one or more components of the plant S), of processing of a response via the artificial intelligence model 20, and of conversion of the computer data D resulting in a message M in natural language, the system 1 provides the user U with the requested prediction P.

### Example 4

Referring now to the previous Example 3, a variant thereof provides that periodically, for example every hour, the computer 3 collects from the first memory means Z computer data D relating to the state of health of the plant S and, without any question or solicitation by the user U, submits them in an input request to the artificial intelligence model 20 to obtain as output therefrom a response containing a prediction P on possible imminent failures.

If the prediction P in the response actually indicates the possibility of failures in the plant S, the generative artificial intelligence model 10, in addition to generating a message M based on such response, also generates a warning and/or alarm message M for the user U. The warning can also be produced upstream by the artificial intelligence model 20 in the response itself or associated with it.

Furthermore, if the artificial intelligence model 20 that produced the prediction P is of the XAI type, the generative artificial intelligence model 10 can provide the user U with a further explanation message M, for example indicating which component of the plant S is most worn and close to a probable failure, and possibly also the reason for the wear of such component.

As an alternative or in addition to the periodic polling by the computer 3, the management interface 5 can listen for any fault signals or events from the plant S. As soon as such a signal arrives from the ERP or from the plant S itself, the management interface 5 produces respective computer data D for the computer 3, which in turn provides them to the generative artificial intelligence model 10 so that this generates an appropriate warning message M in natural language for the user U.

### Example 5

Referring to the topology of the system 1 described in Example 1 and to the context described in Example 3, in a variant of the invention the user U asks the system 1, via a message M typed in the chat of the user interface 7, to plan a maintenance plan for the plant S such as to minimize the possibility of failures or malfunctions and which therefore includes the execution of preventive maintenance interventions.

The computer 3 receives the computer data D relating to the question posed by the user U and, by means of the management interface 5, recovers from the ERP and/or from the first memory means Z of the plant S computer data D indicating the status of wear of the components of the plant S itself, in addition to any constraints such as for example the availability of technicians for maintenance, the availability of materials or components to be replaced, the duration of maintenance interventions, the production plan scheduled for the plant S, and so on.

Any further constraints can be provided by the user U in the said message M or in other messages M.

The computer data D on the state of wear of the plant S are subjected to the artificial intelligence model 20, which provides the computer 3 with computer data D relating to a prediction P on the next failures or wear.

The set of computer data D is then provided to the ERP so that the latter can develop the required maintenance plan, based on the expected faults and taking into account the constraints imposed. Alternatively, as already described, the programming of the maintenance plan can be performed by computer 3.

On the one hand, the maintenance plan is stored in the first memory means Z, and on the other it is forwarded to the generative artificial intelligence model 10 so that it can be confirmed and communicated to the user U in a message M in natural language.

Alternatively, the artificial intelligence model 20 can be adapted or trained to draw up a maintenance and/or production plan itself.

Once the maintenance plan has been programmed, the ERP can signal to the computer 3 an alert near the beginning of each phase of the plan, or the computer 3 can periodically consult the plan, so that the computer 3 can signal to the user U, via the user interface 7, the approach of individual maintenance interventions, together with the personnel and required materials.

### Example 6

Referring again to the topology of the system 1 described in Example 1, a user U who is a maintenance technician wants to use the system 1 to check whether a component of the system S is faulty.

The user U takes a photograph of the component and sends it to the system 1 as a computer document in the user interface 7 chat, along with an appropriate question in a message M.

The generative artificial intelligence model 10 extracts the intent of the request for an analysis from the message M and associates the photograph as an attribute, making the related computer data D available to the computer 3.

The artificial intelligence model 20 identifies the component in the photograph and determines, by means of analysis and graphic comparisons, its state of wear, providing the computer 3 with the outcome of the analysis in a response in output computer data D.

Optionally, in the output computer data D the artificial intelligence model 20 also inserts an indication for the computer 3 to search and collect from the first memory means Z an operating manual for the maintenance of the worn component, to be provided to the user U as a pdf file associated with the outcome contained in the response message M.

## Claims

1. Simplified control management system, assigned for the management of at least one work system (S) connected to first memory means (Z) for computer data (D), the system (1) comprising:
- a computer (3) assigned to perform operations on computer data (D);
- a user interface (7) assigned for interaction between the system (1) and a user (U) of the system (1);
- a management interface (5) assigned for interaction between the system (1) and the at least one work system (S) and the first memory means (Z);
the computer (3), the user interface (7) and the management interface (5) being connected to each other; the system (1) being **characterized by** implementing at least one generative artificial intelligence model (10) adapted at least to:
- receiving from the user interface (7) natural language messages (M) provided by the user (U) to the user interface (7) and including intents and/or information;
- producing computer data (D) including data, requests and/or commands for the system (1), the at least one work system (S) and/or the first memory means (Z) on the basis of said intents and/or information;
- forwarding said computer data (D) including data, requests and/or commands to the system (1), to at least one work system (S) and/or to the first memory means (Z);
- collecting computer data (D) including data, responses and/or signals from the system (1), from at least one work system (S) and/or from the first memory means (Z);
- generating natural language messages (M) for the user (U) including responses and/or information based on said data, responses and/or signals;
- providing the user interface (7) with said natural language messages (M) for the user (U) including responses and/or information;
wherein the at least one generative artificial intelligence model (10) is based on one or more between Large Language Models (LLM), Large Multimodal Models (LMM), transformer-based models, Small Language Models (SLM).

2. System according to claim 1 **characterized by** further implementing at least one artificial intelligence model (20) adapted at least to:
- receiving from the computer (3) input computer data (D) including at least one request for prediction or analysis, and/or data;
- producing at least one prediction or analysis on the operation of the at least one work system (S), and/or at least one command for the at least one work system (S), based on said input computer data (D);
- providing the computer (3) with output computer data (D) including at least one response containing said at least one prediction or analysis, and/or said at least one command.

3. System according to claim 2 **characterized in that** each request for prediction or analysis concerns at least the operation state, and/or the operation planning, and/or the energy consumption, and/or the possible failures or anomalies of the at least one work system (S); each command includes at least the regulation of the operation, and/or the starting and/or stopping of the operation of the at least one work system (S).

4. System according to claim 2 or 3 **characterized in that** the at least one artificial intelligence model (20) is of the Explainable AI (XAI) type or similar and, for at least some of the predictions, analyses or commands produced, it also produces a respective description, which is included in the output computer data (D), with the at least one generative artificial intelligence model (10) assigned to generate a natural language explanation message (M) for the user (U) based on said description.

5. System according to any one of the preceding claims **characterized in that** the user interface (7) includes at least one interface means (8) among chat, control panel, speaker and microphone, display and keyboard, webcam, and/or similar.

6. System according to any one of the preceding claims **characterized in that** the intents in the messages (M) provided by the user (U) to the user interface (7) include queries and/or commands, and the information in the messages (M) provided from the user (U) to the user interface (7) include inputs and/or feedbacks (F) for the training of at least one generative artificial intelligence model (10).

7. System according to any one of the preceding claims **characterized in that** the operations that can be performed by the computer (3) include:
- acquisition of the computer data (D) from the user interface (7) and/or from the management interface (5);
- transfer of the computer data (D) to the user interface (7) and/or to the management interface (5);
- call of computing functions of the user interface (7) and/or of the management interface (5) and/or of the at least one generative artificial intelligence model (10);
- analysis and/or manipulation of the computer data (D) according to predetermined algorithms;
- execution of computing functions of the computer (3) itself;
- storage of the computer data (D) in second memory means (4) of the system (1);
- generation of computer data (D);
- extraction of data, requests, commands, responses and/or signals from the computer data (D).

8. System according to claim 7 **characterized in that** the second memory means (4), and possibly the first memory means (Z), are of the data lake type.

9. System according to claim 2 and any one of the preceding claims **characterized in that** the at least one generative artificial intelligence model (10) is capable of autonomously selecting which artificial intelligence model or models (20) to use, based on the intents and/or information provided by the user (U).

10. Method for the simplified control management of at least one work system (S) relating to first memory means (Z) for computer data (D), the method being executable in a system (1) comprising:
- a computer (3) assigned to perform operations on computer data (D);
- a user interface (7) assigned for interaction between the system (1) and a user (U) of the system (1);
- a management interface (5) assigned for interaction between the system (1) and the at least one work system (S) and the first memory means (Z);
the computer (3), the user interface (7) and the management interface (5) being connected to each other; the method being **characterized in that** it comprises the following phases, carried out by means of at least one generative artificial intelligence model (10) implemented by the system (1):
- receiving from the user interface (7) natural language messages (M) provided by the user (U) to the user interface (7) and including intents and/or information;
- producing computer data (D) including data, requests and/or commands for the system (1), the at least one work system (S) and/or the first memory means (Z) on the basis of said intents and/or information;
- forwarding said computer data (D) including data, requests and/or commands to the system (1), to the at least one work system (S) and/or to the first memory means (Z);
- collecting computer data (D) including data, responses and/or signals from the system (1), from the at least one work system (S) and/or from the first memory means (Z);
- generating natural language messages (M) for the user (U) including responses and/or information based on said data, responses and/or signals;
- provide the user interface (7) with said natural language messages (M) for the user (U) including responses and/or information;
wherein the at least one generative artificial intelligence model (10) is based on one or more between Large Language Models (LLM), Large Multimodal Models (LMM), transformer-based models, Small Language Models (SLM).

11. Method according to claim 10 **characterized by** further comprising the following phases, carried out by means of at least one artificial intelligence model (20) implemented by the system (1):
- receiving from the computer (3) input computer data (D) including at least one request for prediction or analysis, and/or data;
- producing at least one prediction or analysis on the operation of the at least one work system (S), and/or at least one command for the at least one work system (S), based on said input computer data (D);
- providing the computer (3) with output computer data (D) including at least one response containing said at least one prediction or analysis, and/or said at least one command.

12. Method according to claim 11 **characterized in that** the phase of producing at least one prediction, analysis or command also involves, for at least some of the predictions, analysis or commands produced, producing a respective description, which is included in the output computer data (D), and **in that** the phase of generating messages (M) also involves generating a natural language explanation message (M) for the user (U) based on said description, where the at least one artificial intelligence model (20) is of the Explainable AI (XAI) type or similar.

13. Method according to claim 11 or 12 **characterized in that** the at least one generative artificial intelligence model (10) is capable of autonomously selecting which artificial intelligence model or models (20) to use, based on the intents and/or information provided by the user (U).

14. Method according to any one of claims 10-13 **characterized in that** the operations executable by the computer (3) comprise:
- acquisition of the computer data (D) from the user interface (7) and/or from the management interface (5);
- transfer of the computer data (D) to the user interface (7) and/or to the management interface (5);
- call of computing functions of the user interface (7) and/or of the management interface (5) and/or of the at least one generative artificial intelligence model (10);
- analysis and/or manipulation of the computer data (D) according to predetermined algorithms;
- execution of computing functions of the computer (3) itself;
- storage of the computer data (D) in second memory means (4) of the system (1);
- generation of computer data (D);
- extraction of data, requests, commands, responses and/or signals from the computer data (D);
wherein the second memory means (4), and possibly the first memory means (Z), are of the data lake type.

15. Method according to any one of claims 10-14 **characterized in that** at least one generative artificial intelligence model (10) and/or artificial intelligence model (20) is executed in "edge computing" mode or environment, and that the system (1) implements an edge adapter assigned to execute such at least one model (10, 20).
